# FASCICULE DE BREVET EUROPEEN

(11) **EP 0 411 978 B1**
(45) Date de publication et mention de la délivrance du brevet: **03.11.1993**
(21) Numéro de dépôt: 90401946.0
(22) Date de dépôt: 05.07.1990
(51) Int. Cl.: B65H 75/22, G11B 23/037

(54) **Bobine pour l'enroulement d'une bande et plus particulièrement d'une bande à alvéoles contenant des composants électroniques**
Spule zum Aufwickeln eines Bandes und insbesondere eines Bandes mit Hohlräumen, die elektronische Komponenten enthalten
Bobbin for winding a tape, particularly an alveolar tape containing electronic components

(30) Priorité: 02.08.1989 FR 8910446
(43) Date de publication de la demande: 06.02.1991
(73) Titulaire: POSSO, Patrick, 1009 Pully (CH)
(72) Inventeur: Posso, Patrick M., CH-1009 Pully (CH)
(74) Mandataire: Caunet, Jean

(56) Documents cités:
- GB-A- 2 028 272
- US-A- 3 438 592
- US-A- 3 822 841
- US-A- 4 266 738
- US-A- 4 473 194

## Description

La présente invention concerne une bobine pour l'enroulement d'une bande et plus particulièrement d'une bande de conditionnement de composants électroniques. Une bobine pour l'enroulement d'une bande est connue du document US-A-4 266 738.

Pour le stockage de ces composants électroniques et leur utilisation ultérieure, il est avantageux de les insérer dans les alvéoles d'une bande, d'enrouler cette bande ainsi chargée dans une bobine et de la dérouler au lieu d'utilisation pour prélever lesdits composants ainsi stockés et protégés.

De telles bobines sont connues et comportent deux flasques et un moyeu, les flasques étant appliqués sur les faces d'appui du moyeu et fixés à celui-ci par des moyens de verrouillage conjugués. Bien entendu, l'épaisseur du moyeu dépend de la largeur de la bande, qui elle-même dépend de l'encombrement des circuits. Dès lors, les bobines d'un même diamètre mais d'épaisseurs différentes sont constituées par les mêmes flasques et par des moyeux d'épaisseurs différentes. Ainsi, les investissements en outillages se trouvent limités et le coût d'une bobine réduit.

Cependant, ces bobines connues présentent les inconvénients suivants. Les moules des flasques et des moyeux sont relativement compliqués et nécessitent pour faire venir les moyens de verrouillage, des pièces mobiles portant sur des rampes inclinées dites "cônes". Il en résulte une imprécision des pièces moulées s'accentuant au fur et à mesure que la série progresse et ceci en raison, non seulement de la complexité des moules, mais également de l'usure des "cônes . Outre l'imprécision des verrouillages, il est à noter la présence de bavures et finalement une difficulté à assembler correctement et avec un bel aspect les flasques avec le moyeu.

Par ailleurs, de telles bobines sont indémontables après assemblage, ce qui peut constituer un inconvénient dans certains cas, notamment lorsqu'ils'agit de réduire le volume de stockage.

La présente invention a pour but de perfectionner cette bobine connue de telle sorte qu'il soit remédié à ses inconvénients précités, qu'en outre les "cônes" soient supprimés, que les difficultés de moulage soient reportées sur les flasques et que les points de fixation entre ceux-ci et le moyeu soient plus nombreux dans une répartition sensiblement uniforme pour améliorer la rigidité et la stabilité géométrique de la bobine.

Dans ce but, les perfectionnements de l'invention résident :
- en ce que le moyeu présente en saillie, dans des logements débouchant dans chacune de ses faces, des lames flexibles, s'étendant dans des directions sensiblement tangentielles et dont l'extrémité libre fléchissante de chacune est séparée par une fente sensiblement radiale d'un élément de verrouillage faisant saillie dans le logement correspondant,
- et en ce que le flasque à fixer sur la face considérée du moyeu présente autant d'éléments de verrouillage conjugués que le moyeu comporte d'éléments de verrouillage, éléments de verrouillage conjugués qui font corps avec le flasque au moyen d'appendices dont l'épaisseur est au plus égale à la largeur des fentes et dont la hauteur est sensiblement égale à la distance séparant la face d'appui du moyeu des éléments de verrouillage, les éléments de verrouillage conjugués s'étendant en porte-à-faux sur les appendices, dans le même sens que les lames flexibles au-dessus des et en contact avec les éléments de verrouillage du moyeu lorsqu'après rapprochement et rotation relatifs de ce moyeu et de ce flasque, les lames flexibles reviennent élastiquement à leur position de repos et bloquent les appendices pour empêcher toute rotation en sens opposé.

Plus particulièrement, chaque élément de verrouillage est une barrette méplate faisant saillie dans le logement correspondant du moyeu et s'étendant sensiblement en prolongement de la lame flexible dudit logement, l'élément de verrouillage conjugué étant une contre-barrette formant avec son appendice une équerre s'étendant en saillie sur la face interne du flasque correspondant.

Suivant une forme de réalisation avantageuse, les flasques sont identiques et montés symétriquement, cependant que les lames flexibles d'une face du moyeu sont dirigées dans le sens opposé à celui des lames flexibles de l'autre face, si l'on observe le moyeu du même côté.

Tous les logements débouchent sur les deux faces et sont regroupés par paires, deux paires consécutives de logements étant séparées par une cloison radiale en Z dont les ailes prolongent lesdites faces et constituent les barrettes de verrouillage les logements d'une même paire sont séparés par une cloison radiale faisant corps d'un côté avec la lame flexible proche d'une face, et de l'autre côté avec la lame flexible proche de l'autre face.

Divers autres caractéristiques et avantages de l'invention ressortent d'ailleurs de la description détaillée qui suit.

Une forme de réalisation de l'objet de l'invention est représentée, à titre d'exemple non limitatif, sur le dessin annexé.

Sur ce dessin
- la figure 1 est une perspective illustrant, à échelle plus grande que nature, la partie de la bobine faisant l'objet du perfectionnement conforme à l'invention,
- la figure 2 est une coupe prise, à plus grande échelle, suivant la ligne II-II de la figure 1.

Ainsi que cela ressort du dessin, la bobine est en matière plastique telle que du polystyrène choc. Elle comporte deux flasques 1, 2 et un moyeu 3 interposé entre ceux-ci.

Les flasques 1 et 2 sont identiques et fabriqués dans le même moule. Ils sont cependant montés symétriquement.

Le moyeu 3 est monolithique et présente deux couronnes concentriques 4 et 5 reliées entre elles par des cloisons 6 dites de verrouillage et des cloisons 7 dites de contre-verrouillage, ces cloisons 6 et 7 étant sensiblement radiales.

Dans l'exemple représenté, les cloisons 6 s'étendent sur toute l'épaisseur du moyeu 3 alors que les cloisons 7 ne s'étendent que sur une partie seulement de cette épaisseur. Les cloisons 6 délimitent deux à deux une paire de logements 8.1 et 8.2, logements qui sont séparés l'un de l'autre par une cloison 7.

Dans ce même exemple, le moyeu comporte cinq logements de rang impair 8.1, 8.3 ... 8.2 n+1 ... 8.9 destinés à coopérer avec le flasque 1 pour sa fixation et cinq logements de rang pair 8.2, 8.4 ... 8.2 n ... 8.10 s'intercalant entre les précédents et destinés à coopérer avec le flasque 2 pour sa fixation. Ces logements sont répartis uniformément les uns à côté des autres en laissant place cependant pour une encoche 9 débouchant à la périphérie du moyeu par une fente 10 à travers laquelle le début de la bande à enrouler est inséré pour sa prise.

La description qui suit se réfère aux moyens de verrouillage mis en oeuvre dans les logements 8.1 et 8.2, les mêmes moyens se retrouvant dans les autres logements quel que soit leur nombre.

La cloison de contre-verrouillage 7 séparant les logements 8.1 et 8.2 fait corps avec des lames flexibles 13.1 et 13.2 s'étendant dans ceux-ci suivant des directions tangentielles opposées. La lame 13.1 est plus proche de la face 11 du moyeu 3 contigüe au flasque 1 et, de même, la lame 13.2 est plus proche de la face 12 dudit moyeu 3 contiguë au flasque 2.

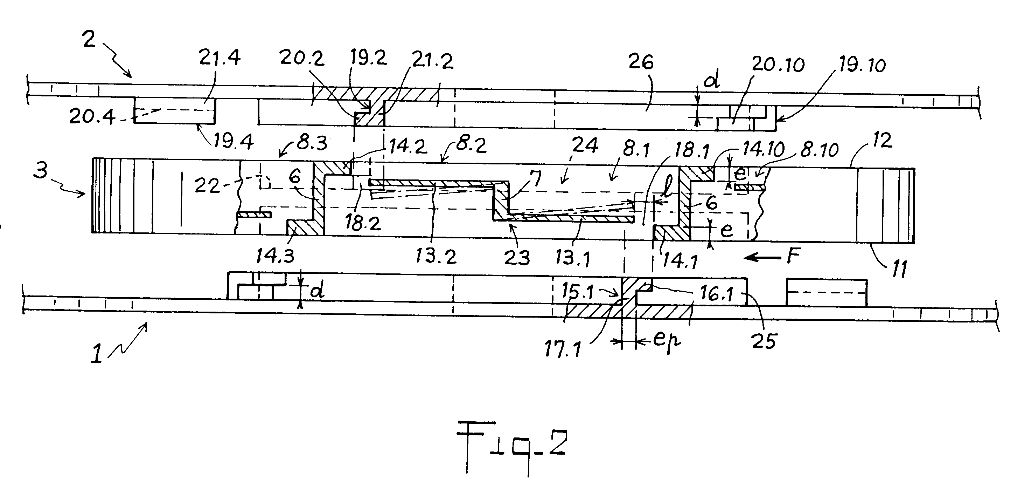

La cloison de verrouillage 6 séparant le logement 8.1 du logement 8.10 (figure 2) fait corps :
- avec une barrette radiale 14.1 de verrouillage conjugué faisant saillie dans le logement 8.1
- et avec une barrette radiale 14.10 de verrouillage conjugué faisant saillie dans le logement voisin 8.10, cette cloison 6 et les barrettes 14.1, 14.10 formant un profil en Z rectangulaire.

Dans l'exemple représenté sur la figure 2, la surface inférieure de la lame flexible 13.1 prolonge sensiblement la surface supérieure de la barrette 14.1 et la surface inférieure de celle-ci est coplanaire avec la face 11 du moyeu. Bien entendu, la lame flexible 13.1 peut être décalée axialement du moment que sa fonction décrite dans qui suit peut s'accomplir, à savoir de s'effacer par fléchissement (position représentée en trait mixte sur la figure 2) pour laisser passer une équerre de verrouillage 15.1 du flasque 1 qui lui correspond et de contre-verrouiller cette équerre en revenant à sa position de repos (représentée en trait plein sur la figure 2). De plus, la surface inférieure de la barrette 14.1 peut être en retrait de la face 11, du moment que l'épaisseur de ladite barrette est suffisante pour supporter le verrouillage décrit dans ce qui suit.

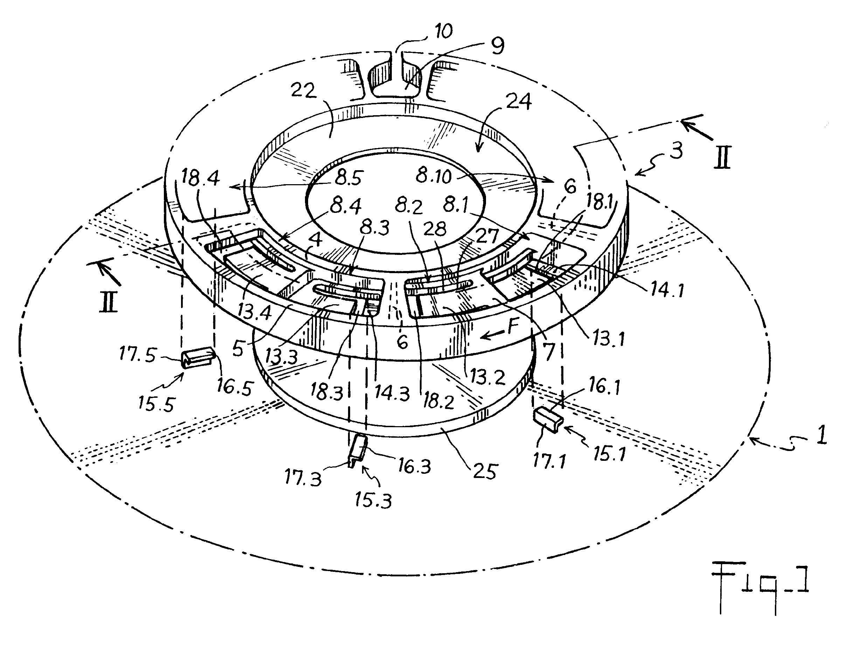

Comme le montrent les figures 1 et 2, le flasque 1 comporte en saillie sur sa face interne cinq équerres 15.1, 15.3, 15.5 ... 15.2n+1 ... 15.9 dont l'aile libre est une barrette radiale de verrouillage 16.1, 16.3, 16.5 ... 16.2 n+1 ... 16.9 susceptible de coopérer avec la barrette conjuguée de verrouillage 14.1, 14.3 ... 14.2n+1 ... 14.9 du moyeu 3. Chaque barrette de verrouillage 16.2n+1 est reliée au flasque 1 par un appendice 17.2 n+1 que forme l'aile de liaison de l'équerre 15.2n+1.

Par ailleurs, les extrémités libres des lames flexibles tangentielles 13.2n+1 du moyeu 3 sont séparées des barrettes radiales conjuguées de verrouillage 14.2n+1 appartenant également au moyeu 3, par des fentes radiales 18.2n+1.

Considérant maintenant l'équerre 15.1 du flasque 1 et la fente 18.1 séparant la lame flexible 13.1 de la barrette 14.1 du moyeu, il est important de remarquer que la largeur "1" de cette fente est au moins égale, c'est-à-dire est égale avec un jeu minimal, à l'épaisseur "ep" de l'appendice 17.1 de l'équerre 15.1.

Pour monter le moyeu 3 sur le flasque 1, il suffit donc :
- de centrer les logements 8.2n+1 sur les équerres 15.1 et de faire tourner ledit moyeu dans le sens de la flèche F jusqu'à ce que ses barrettes 14.2n+1 butent contre les barrettes 16.2n+1 du flasque 1 supposé fixe,
- puis, de presser sur le moyeu pour que lesdites équerres 16.2n+1 du flasque fassent fléchir les lames 13.2n+1 du moyeu,
- enfin, de faire tourner le moyeu 3 dans le sens de la flèche F pour que les barrettes 16.2n+1 du flasque 1 se placent au-dessus et contre (figure 2) les barrettes 14.2n+1 du moyeu 3 et ceci jusqu 'à ce que les appendices 17.2n+1 du flasque butent contre les barrettes 14.2n+1, position dans laquelle les lames flexibles sont libérées, reviennent élastiquement à leur position de repos et bloquent lesdits appendices en empêchant ainsi le démontage par rotation dans le sens opposé à la flèche F du moyeu relativement au flasque.

De la même façon que cela est décrit dans ce qui précède pour la cloison de verrouillage 6 séparant le logement 8.1 du logement 8.10, la cloison de verrouillage 6 séparant le logement 8.2 du logement 8.3 (figure 2) fait corps :
- avec une barrette 14.2 de verrouillage conjugué faisant saillie dans le logement 8.2
- et avec une barrette 14.3 de verrouillage conjugué faisant saillie dans le logement 8.3, cette cloison 6 et les barrettes 14.2 et 14.3 formant un profilé en Z rectangulaire.

Le flasque 1 comporte autant d'équerres 19.2n que le moyeu 3 comporte des barrettes conjuguées de verrouillage 14.2n, lesquelles sont susceptibles de coopérer avec des barrettes de verrouillage 20.2n que forment des équerres 19.2n du flasque 2 auquel lesdites barrettes sont reliées par des appendices 21.2n.

Par ailleurs, les lames flexibles 13.2n sont séparées des barrettes 14.2n par des fentes 18.2n de largeur au moins égale à l'épaisseur des appendices 21.2n.

Il est important de noter qu'en raison du montage symétrique des flasques identiques 1 et 2, les barrettes 20.2n du flasque 1 font saillie (figure 2) dans le sens opposé des barrettes 16.2n+1 du flasque 1, comme d'ailleurs les lames flexibles 13.2n du moyeu 3 sont orientées à l'opposé des lames flexibles 13.2n+1 dudit moyeu. Dès lors, pour monter le moyeu 3 sur le flasque 2 supposé fixe et disposé au-dessus, il faut aprèsles avoir rapprochés, faire tourner ledit moyeu dans le sens opposé à celui de la flèche F.

Ainsi que cela ressort plus particulièrement de la figure 1, la couronne intérieure 4 du moyeu 3 fait corps avec un anneau médian de renforcement 22 séparant deux chambrages 23 et 24 destinés au centrage de bossages centraux 25 et 26 des flasques 1 et 2. La profondeur des chambrages est au moins égale à la hauteur des bossages.

Par ailleurs, la distance libre "d" entre le flasque 1 (ou 2) et ses barrettes 16.2n+1 (ou 20.2n) est égale, au jeu de fonctionnement près, à l'épaisseur "e" des barrettes 14.2n+1 ou 14.2n) du moyeu 3 pour que lors du verrouillage, les flasques 1 et 2 soient appliqués avec un serrage suffisant contre les faces 11 et 12 du moyeu 3.

La figure 1 montre également que les couronnes 4, 5 et les cloisons 6, 7 font corps de moulage avec des nervures circulaires de renforcement 27 séparées des lames flexibles 13 par des fentes 28.

Il est clair que les flasques et le moyeu peuvent être réalisés avec un poids de matière plastique minimal, qu'en outre le moulage de ces pièces peut être exécuté sans difficulté avec des moules simplifiés exempts de pièces susceptibles de s'user par frottement.

Bien entendu, la bobine peut être démontée. Si cela est utile, il faut ménager dans les flasques 1 et 2 en regard des extrémités libres des lames flexibles 13, des trous non représentés il faut aussi prévoir un accessoire portant des tiges réparties de la même façon que lesdits trous.

Pour démonter la bobine on engage les tiges de cet accessoire dans les trous d'un flasque et on appuie pour effacer les lames flexibles 13 qui par suite ne retiennent plus les appendices 17 et 21. On peut alors faire tourner le moyeu relativement au flasque considéré, ce qui a pour effet de dégager les barrettes 14 du moyeu 3, des barrettes 16 ou 20 du flasque.

## Revendications

1. Bobine pour l'enroulement d'une bande et plus particulièrement d'une bande à alvéoles contenant des composants électroniques, la bobine comprenant deux flasques (1, 2) reliés à un moyeu (3) d'enroulement par des moyens de verrouillage,
caractérisée :
- en ce que le moyeu (3) présente en saillie, dans des logements (8.1, 8.3 ... ou 8.2, 8.4 ...)débouchant dans chacune de ses faces (11 ou 12), des lames flexibles (13.1, 13.3 ... ou 13.2, 13.4 ...) s'étendant dans des directions sensiblement tangentielles et dont l'extrémité libre fléchissante de chacune est séparée par une fente (18.1, 18.3 ... ou 18.2, 18.4 ...) sensiblement radiale d'un élément de verrouillage (14.1, 14.3 ... ou 14.2, 14.4 ...) faisant saillie dans le logement correspondant,
- et en ce que le flasque (1 ou 2) à fixer sur la face considérée (11 ou 12) du moyeu (3) présente autant d'éléments de verrouillage conjugués (16.1, 16.3 ... ou 20.2, 20.4 ...) que le moyeu comporte d'éléments de verrouillage, éléments de verrouillage conjugués qui font corps avec le flasque au moyen d'appendices (17.1, 17.3 ou 21.2, 21.4 ...) dont l'épaisseur (ep) est au plus égale à la largeur (l) des fentes et dont la hauteur (d) est sensiblement égale à la distance séparant la face d'appui du moyeu des éléments de verrouillage, les éléments de verrouillage conjugués s'étendant en porte-à-faux sur les appendices, dans le même sens que les lames flexibles au-dessus des et en contact avec les éléments de verrouillage du moyeu lorsqu'après rapprochement et rotation relatifs de ce moyeu et de ce flasque, les lames flexibles reviennent élastiquement à leur position de repos et bloquent les appendices pour empêcher toute rotation en sens opposé.

2. Bobine selon la revendication 1, caractérisée en ce que chaque élément de verrouillage est une barrette méplate (14) faisant saillie dans le logement correspondant (8) du moyeu (3) et s'étendant sensiblement en prolongement de la lame flexible (13) dudit logement, l'élément de verrouillage conjugué étant une barrette (16) formant avec son appendice (17) une équerre (15) s'étendant en saillie sur la face interne du flasque correspondant (1 ou 2).

3. Bobine selon la revendication 1 ou 2, caractérisée en ce que les flasques (1, 2) sont identiques et montés symétriquement, cependant que les lames flexibles (13.1, 13.3 ...) d'une face (11) du moyeu sont dirigées dans le sens opposé à celui des lames flexibles (13.2, 13.4 ...) de l'autre face (12), si l'on observe le moyeu du même côté.

4. Bobine selon la revendication 3, dépendante de la revendication 2, caractérisée :
- en ce que tous les logements (8.1, 8.2, 8.3, 8.4 ...) débouchent sur les deux faces (11 et 12) et sont regroupés par paires (8.1 et 8.2, 8.3 et 8.4 ...) deux paires consécutives de logements étant séparées par une cloison radiale en Z dont les ailes prolongent lesdites faces et constituent les barrettes de verrouillage (14.1, 14.3 ... 14.2, 14.4 ...)
- et en ce que les logements d'une même paire sont séparés par une cloison radiale (7) faisant corps d'un côté avec la lame flexible (13.1 ...) proche d'une face (11) et de l'autre côté avec la lame flexible (13.2 ...) proche de l'autre face (12).

5. Bobine selon la revendication 4, caractérisée en ce que chaque cloison (7) portant une paire de lames flexibles opposées (13.1, 13.2 ...) fait corps avec deux nervures circulaires de raidissement (27) venues de moulage avec deux couronnes concentriques (4, 5) du moyeu (3) délimitant avec les cloisons (6, 7) les logements, (8.1, 8.2 ...),ces nervures s'étendant en prolongement des lames flexibles et étant séparées de celles-ci par des fentes (28).

## Patentansprüche

1. Spule zum Aufwickeln von Bandmaterial, insbesondere mit elektronischen Bauteilen versehenen wabenförmigen Bändern, bestehend aus zwei seitlichen Scheiben (1, 2), welche unter Einsatz von Verriegelungselementen an einem Kern (3) befestigt sind,
dadurch **gekennzeichnet,**
- daß der Kern (3) an den Endflächen (11 bzw. 12) mündende Kammern (8.1, 8.3 ... bzw. 8.2, 8.4 ...) aufweist, innerhalb welcher in entgegengesetzten tangentiellen Richtungen sich erstreckende biegsame Lamellen (13.1, 13.3 ... bzw. 13.2, 13.4 ...) vorgesehen sind, deren Enden unter Ausbildung in radialer Richtung sich erstreckenden Spalten (18.1, 18.3 ... bzw. 18.2, 18.4...) bis an Verriegelungselemente (14.1, 14.3 ... bzw. 14.2, 14.4 ...) heranreichen, welche ebenfalls innerhalb der betreffenden Kammer vorhanden sind und
- daß die an den Endflächen (11, 12) des Kernes (3) zu befestigenden Scheiben (1, 2) eine der Anzahl von Verriegelungselementen entsprechende Anzahl von Halteelementen (16.1. 16.3 ... bzw. 20.2, 20,4 ...) aufweisen, wobei diese Halteelemente unter Einsatz von Ansätzen (17.1, 17.3 bzw. 21.2, 21.4...) an den entsprechenden Scheiben 1, 2) angesetzt sind, und die Dicke (ep) dieser Ansätze höchstens gleich der Breite (1) der Spalte ist, während die Höhe (d) im wesent lichen gleich dem Abstand entspricht, welcher die Auflagefläche des Kernes von den Verriegelungselementen trennt, und wobei die Halteelemente sich in Schräglage auf dem betreffenden Ansätzen in derselben Richtung wie die biegsamen Lamellen erstrecken, welche in Berührung mit den Verriegelungselementen des Kernes gelangen, sobald nach der Annäherung und Rotation des Kernes in Bezug auf die betreffende Scheibe die biegsamen Lamellen elastisch in ihre Ruheposition und dabei die Ansätze blockieren, um auf diese Weise jegliche Rotation in entgegengesetzter Richtung zu verhindern.

2. Spule nach Anspruch 1, dadurch gekennzeichnet, daß jedes Verriegelungselement ein flacher Steg (14) ist, welcher innerhalb der entsprechenden Kammer (8) des Kernes (3) vorspringt und sich dabei in der Verlängerung der biegsamen Lamelle (13) der betreffenden Kammer erstreckt, während die entsprechenden Halteelemente in Form von Stegen (16) ausgebildet sind, welche unter Einsatz eines Ansatzes (17) jeweils ein Winkelelement (15) bilden, das auf der Innenseite der jeweiligen Scheibe (1, 2) vorspringt.

3. Spule nach Anspruch 1 oder 2, dadurch gekennzeichnet, daß die Scheiben (1, 2) identisch ausgebildet sind und symmetrisch montiert sind, während die biegsamen Lamellen (13.1, 13.3 ...) der einen Endfläche (11) des Kerns in entgegengesetzter Richtung zu den biegsamen Lamellen (13.2, 13.4 ...) der anderen Endfläche (12) bei seitlicher Betrachtung gerichtet sind.

4. Spule nach Ansprüchen 2 und 3, dadurch gekennzeichnet,
- daß die an den Endflächen (11, 12) einmündende Kammern (8.1, 8.2, 8.3, 8.4...) jeweils paarweise (8.1, 8.2; 8.3. 8.4; ...) gruppiert sind, wobei zwei aufeinander folgende Kammernpaare durch einen Z-förmigen Verbindungsteg (6) voneinander getrennt sind, bei welchem die Ansätze die Endflächen verlängern, und dabei die Verriegelungsstege (14.1, 14.3 ...14.2, 14.4 ...) bilden und
- daß die Kammern innerhalb desselben Paares durch einen radialen Verbindungssteg (7) getrennt sind, an welchem im Bereich der jeweiligen Endflächen (11, 12) die biegsamen Lamellen (13.1 ...13.2 ...) angesetzt sind.

5. Spule nach Anspruch 4, dadurch gekennzeichnet, daß die jeweils ein Paar von entgegengesetzt gerichteten biegsamen Lamellen (13.1, 13.2 ....) tragenden radialen Verbindungsstege (7) in entsprechende kreisförmige Versteifungsringe (27) übergehen, welche in Verbindung mit konzentrischen Ringen (4, 5) des Kernes (3) und den Verbindungsstegen (6, 7) die Kammern (8.1, 8.2 ...) begrenzen, wobei diese Versteifungsringe (27) sich in Verlängerungsrichtung der biegsamen Lamellen erstrecken und gegenüber denselben durch Spalte (28) getrennt sind.

## Claims

1. Reel for winding a tape and more particularly a tape having cells containing electronic components, the reel comprising two flanges (1, 2) connected to a winding hub (3) by locking means, characterized in that:
- the hub (3) has flexible latching blades (13.1, 13.3... or 13.2, 13.4...) projecting in substantially tangential directions in housings opening out into each of the end faces of the hub, the deflectable free end of each flexible blade being separated from a locking element (14.2, 14.3... or 14.2, 14.4...) projecting into the corresponding housing by a gap (18.1, 18.3.. or 18.2, 18.4...) which is substantially radial; and in that
- the flange (1 or 2) to be fixed to the considered face (11 or 12) of the hub (3) has as many complementary locking elements (16.1 16.3... or 20.2, 20.4...) as the hub includes locking elements, the complementary locking elements being integral with the flange via shanks (17.1, 17.3 or 21.2, 21.4...) of thickness "ep" no greater than the width "ℓ" of the gaps, and of height "d" substantially equal to the distance separating the bearing face of the hub from the locking elements, the complementary locking elements being cantilevered out from the shanks in the same direction as the flexible blades, extending over the locking elements of the hub and being in contact therewith when the flexible blades return resiliently to their rest positions after the hub and the flange have been brought together and rotated relative to each other, thereby latching against the shanks and preventing rotation in the opposite direction.

2. Reel according to claim 1, characterized in that each locking element is a flat locking bar (14) projecting into the corresponding housing (8) of the hub (3) and extending substantially in alignment with the flexible blade (13) of said housing, the complementary locking element being a complementary locking bar (16) which together with its shank (17) constitutes a hook (15) projecting from the inside face of the corresponding flange (1 or 2).

3. Reel according to claim 1 or 2, characterized in that the flanges (1, 2) are identical and mounted symmetrically, with the flexible blades (13.1, 13.3...) of one face (11) of the hub being directed in the opposite direction to the flexible blades (13.2, 13.4...) of the other face (12), when observing the hub from the same end.

4. Reel according to claim 3, dependent of claim 2, characterized in that
- all of the housings (8.1, 8.2, 8.3, 8.4...) open out into both end faces (11 and 12) and are grouped together in pairs (8.1 and 8.2, 8.3 and 8.4) with two consecutive pairs of housings being separated by a Z-shaped radial partition whose limbs extend said faces and constitute the locking bars (14.1, 14.3... 14.2, 14.4...)
- and in that the housings in each pair are separated from each other by a radial partition (7) integral at one end with the flexible blade (13.1...) close to one face (11) and at its other end with the flexible blade (13.2...) close to the other face (12).

5. Reel according to claim 4, characterized in that each partition (7) carrying an opposite pair of flexible blades (13.1, 13.2...) is integral with two circular stiffening ribs (27) molded together with two concentric rings (4, 5) of the hub (3) co-operating with the partitions (6,7) to delimit the housings (8.1, 8.2...), said ribs extending in the same planes as the flexible blades and being separated therefrom by slots (28).
